# EUROPEAN PATENT SPECIFICATION

(11) **EP 4 733 088 B1**
(45) Date of publication and mention of the grant of the patent: **25.11.2026**
(21) Application number: 24208097.6
(22) Date of filing: 22.10.2024
(51) Int. Cl.: B60C 11/12

(54) **A TYRE HAVING SIPES, AND A LAMELLA PLATE**
REIFEN MIT EINSCHNITTEN UND LAMELLENPLATTE
PNEU AYANT DES LAMELLES ET PLAQUE À LAMELLES

(43) Date of publication of application: 29.04.2026
(60) Divisional application: 26190666.3 / 4 813 672
(73) Proprietor: Nokian Renkaat Oyj, 37101 Nokia (FI)
(72) Inventor: KORKAMA, Tomi, 37101 Nokia (FI)
(74) Representative: Berggren Oy

(56) References cited:
- JP-B2- 4 327 962
- US-A1- 2011 168 311
- US-A1- 2020 298 625
- US-A1- 2023 302 854

## Description

### Technical field

The present invention relates to a tyre having tread blocks and being provided in the tread blocks with sipes, more particularly to an improved sipe structure or sipe arrangement of a tread block of a tyre. The present invention also relates to lamella plates that are used in the manufacturing process of a pneumatic tyre for making said sipe structure or sipe arrangement.

### Background

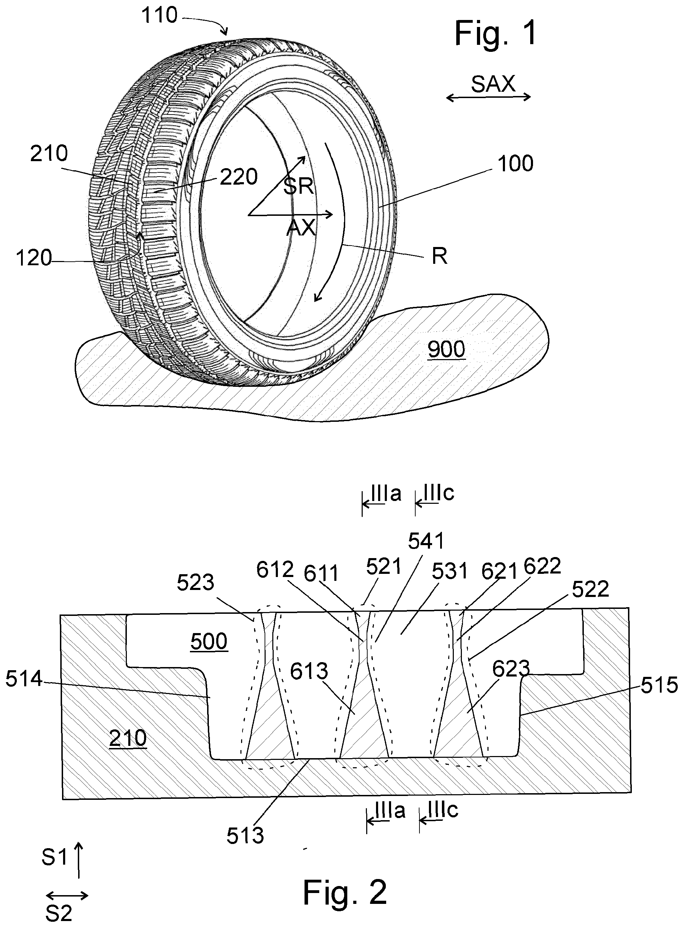

A pneumatic tyre 100 is indicated in Fig. 1. The pneumatic tyre 100 is known to include a tread 110 which has circumferential and transversal grooves 120 on its outer surface, said grooves 120 defining a number of protruding parts, such as ribs and tread blocks 210, 220. The tread 110 is meant for a rolling contact against a ground surface 900, such as road. The grooves 120 are meant for draining water and/or slush that is possibly located on the ground surface away from the tread, so that the contact between the tread 110 and the ground surface 900 is as good and consistent as possible.

Certain types of tyres such as winter tyres and all season tyres are provided in the tread with a number of sipes 500 at various angles with respect to a motion direction of the tyre. The sipes 500 serve a better tyre-ground contact by providing more gripping edges, and particularly in rain by trapping water or on snow by trapping slush/snow, thereby improving traction, braking and lateral stability. The sipes 500 also make the rubber material to deform more easily, in effect making the tyre appear softer. This also improves friction. Sipes 500 are formed during manufacturing a tyre 100, e.g. by inserting a lamella plate to a green tyre, and after curing the tyre, removing the lamella plate from the tyre 100. A sipe 500 remains at the location from which the lamella plate has been removed.

One technical function of the sipes is to receive water and/or slush and/or snow from the surface on which the tyre is running Thus, when the tyre runs on a wet surface, some of the water and/or snow enters into the sipes. Slush is a mixture of water and snow.

To maintain good wet grip of the tyre even when the tyre wears, the document US2023/0001746A1 proposes to provide the sipes with bottom cavities that are wider than other parts of the sipe. In the field of tyres, the document US2020298625 discloses a heavy truck tire with a tread having grooves including one hidden groove, two open grooves and two partially hidden grooves. Each of said two partially hidden grooves comprises openings to a round-engaging contact surface and undersurface channels connecting adjacent openings. Moreover, the document US20110168311 discloses a multi-stage tire having a longitudinal groove extending in a longitudinal direction within a second wear layer of a tread element, wherein said longitudinal groove becomes exposed after a depth of a first wear layer has been worn. The multi-stage tire tread further includes one or more lateral grooves extending from the longitudinal groove in a lateral direction within the second wear layer of the tread element.

The inventors have found that such bottom cavities also serve as reservoirs for water and/or snow when driving on wet road or a snowy road. Without being bound to a theory, the water and/or snow enters the sipe at the onset of the tread block comprising the sipe hitting the ground on which the tyre is used. As the tyre further rotates, the deformation of the tyre imposes pressure to the sipe and this pressure seems to drive the water/slush/snow out of the sipe, when the tread block comprising the sipe is in full contact with ground. If the water/slush/snow is then compressed out of the sipe, the wet grip properties of the tyre as not as good as they could be, because the water/slush/snow reenters between the tread and the ground from the sipes.

### Summary

The inventors have found that the wet grip properties and snow grip properties of the tyre can be improved by using sipes having, on one hand, bottom cavities to receive a substantial amount of water and/or slush and/or snow, and on the other hand, a throat that is configured to allow (and allows, when such used) fluid and/or snow (i.e. the water, the snow, or the slush, which is a mixture a water and snow) to enter the bottom cavity when the tread block having the sipe is not loaded, the throat being also configured to inhibit the fluid and/or snow (i.e. the water, the snow, or the slush, which is a mixture a water and snow) from escaping from bottom cavity, when the tread block having the sipe is loaded. The loading of the tread block occurs, when the tread block is at a ground contact, and the unloading of the tread block occurs as the tyre rotates so that the tread block no longer contacts the ground, i.e. it becomes exposed to atmosphere. Notably, in regular use, a bottom part of the tyre is loaded in this sense while at the same time, a top part of the tyre is unloaded. The invention is disclosed in more specific terms in independent claim 1. The dependent claims disclose preferred embodiments. The description and figures explain these and other embodiments. A lamella plate is disclosed in independent claim 14, and a use of the lamella plate is disclosed in claim 15.

### Brief description of the drawings

- Fig. 1: shows a tyre in a perspective view,
- Fig. 2: shows a side view of a sipe in a tread block,
- Fig. 3a: shows the cross sectional view IIIa-IIIa of Fig. 2 of the sipe of Fig. 2 in a first state, i.e. in an unloaded state,
- Fig. 3b: shows the cross sectional view IIIa-IIIa of Fig. 2 of the sipe of Fig. 2 in a second state, i.e. in a compressed state,
- Fig. 3c: shows the cross sectional view IIIc-IIIc of Fig. 2 of the sipe of Fig. 2,
- Fig. 3d: shows the cross sectional view IIIa-IIIa of Fig. 2 of the sipe of Fig. 2 in a first state, i.e. in an unloaded state, together with some measures,
- Fig. 3e: shows two tread blocks in a cross sectional view, the tread block being separated by a groove, the first tread block having a sipe,
- Fig. 4a: shows a side view of another embodiment of a sipe in a tread block,
- Fig. 4b: shows the cross sectional view IVb-IVb of Fig. 4a of the sipe of Fig. 4a,
- Fig. 4c: shows a side view of a part of the sipe of Fig. 4a in a first state, i.e. in an unloaded state,
- Fig. 4d: shows a side view of the part of the sipe of Fig. 4a shown in Fig. 4c in a second state, i.e. in a compressed state,
- Figs. 5a to 5c: show various views of a lamella plate suitable for forming the sipe shown in Figs. 2 and 3a to 3d,
- Fig. 6a: shows a first primary sipe portion 521; the first primary sipe portion corresponding to Fig. 4a or the first primary sipe portion 521 being manufacturable by the lamella plate of Figs. 5a to 5c, in which case the sipe corresponds to that of Figs. 2 and 3a to 3d,
- Fig. 6b: shows schematically the first primary sipe portion 521 and a secondary sipe portion 531 of a sipe manufacturable by the lamella plate of Figs. 5a to 5c,
- Fig. 6c: shows schematically the first primary sipe portion 521 and a secondary sipe portion 531 of a sipe shown in Figs. 4a to 4d,
- Fig. 7a: shows the detail VIIa of Fig. 7b,
- Fig. 7b: shows an embodiment of a lamella plate, and
- Fig. 7c: shows a part of a sipe manufacturable by the lamella plate of Fig. 7b, the parts of the sipe shown corresponding to the part of the lamella plate shown in Fig. 7a.

In the figures, S1 denotes a direction of a depth of the sipe, the direction S1 typically being at least substantially radial and directed away from an axis of rotation; S2 denotes direction of a length of the sipe; and S3 denotes a direction of a width of the sipe. SR denotes a radial direction of the tyre, SAX denotes an axial direction of the tyre, which is perpendicular to SR, and R dotes a direction of rotation of the tyre.

### Detailed description

In this description at least the following terms are used:
A sipe refers to a narrow slot provided in a tread block of a tyre. A primary width of a sipe may be e.g. 0.2 mm to 0.9 mm, such as 0.2 mm to 0.5 mm. The primary width of the sipe may refer e.g. to an typical width of a top opening of the sipe. It may be equal e.g. to a width of a planar part of a sipe. It may be e.g. equal to a width WS2 of a first secondary sipe portion 531.

A groove refers to a wider and longer groove limiting tread blocks of the tread. A width of a groove may be e.g. at least 1 mm, such as 1 mm to 7 mm.

A lamella plate refers to a plate that is usable for forming a sipe in a moulding process. Thus, when a lamella plate is embedded to uncured rubber, and removed therefrom after curing the rubber, the shape of the sipe formed by the lamella plate is geometrically congruent with the lamella plate. The rubber from which the lamella plate is removed may be rubber material of a tyre or rubber material of a tread band. Such a tread band may be thereafter applied onto a tyre for treading the tyre. However, in the alternative and more commonly, the tread is formed when curing a green tyre.

A lamella refers to a part of rubber arranged in between two sipes.

Referring to Fig. 1, as is well known, a tyre 100 comprises a tread 110. The tread is formed of multiple tread blocks 210, 220. A part of a groove 120 remains between two tread blocks 210, 220. Each tread block 210 may comprise a number of sipes, shown by the reference number 500 in other figures. Fig. 2 shows in detail a tread block 210 to which a first sipe 500 has been provided.

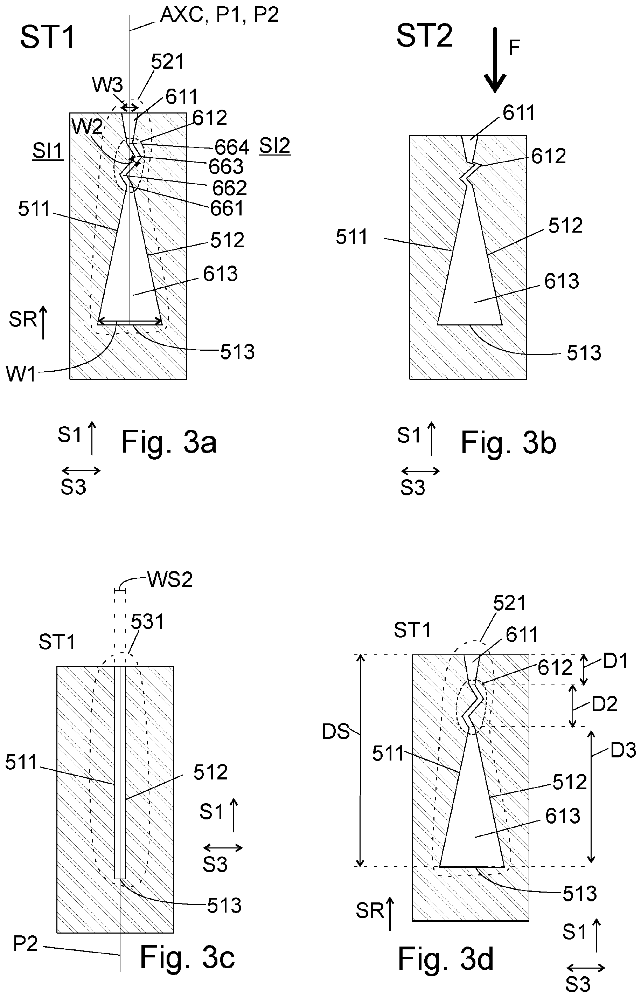

The first sipe 500 is arranged between a first sipe side wall 511 and a second sipe side wall 512, and is further delimited by a bottom 513, as better shown in Figs. 3a to 3c. In this way, the tread block 210 comprises the first sipe side wall 511, the second sipe side wall 512, and the bottom 513, which all (511, 512, 513) delimit the first sipe 500.

As discussed in the section summary, the inventors have found that a throat of a sipe (i.e. a first throat 612 of the first sipe 500) improves wet grip. In particular, such a throat that allows fluid and/or snow (e.g. the water or the snow, or the slush, which is a mixture of water and snow) to enter a bottom cavity, when the tread block having the sipe is not loaded, and also inhibits the fluid and/or snow from escaping from bottom cavity, when the tread block having the sipe is loaded, improves wet grip.

In line with this, the tread block 210 is configured to be in regular use of the tyre alternately in a first state ST1, i.e. an unloaded state, and in a second state ST2, i.e. in a compressed state. A first primary sipe portion 521 of the first sipe 500, when in the first state ST1, is shown in Figs. 2 and 3a. The first primary sipe portion 521 of the first sipe 500, when in the second state ST2, is shown in Fig. 3b. In Fig. 3b, the symbol F denotes a force that causes compression to the tread block 210. In regular use, the force F would be a force of the ground (e.g. surface 900, see Fig. 1) acting on the a part of the tread 110 of the tyre, in particular such a part of the tread 110 that comprises the tread block 210 having the first sipe 500. Thus, in a typical use, F would be directed from a surface 900 upwards.

Referring to Fig. 2, the first sipe 500 comprises the first primary sipe portion 521 and a first secondary sipe portion 531. The throat (i.e. a first throat 612) that alternately inhibits and does not inhibit the flow of fluid and/or snow from/to the bottom cavity is arranged in the first primary sipe portion 521. The first secondary sipe portion 531 may be e.g. planar and flat. The first primary sipe portion 521 and the first secondary sipe portion 531 do not overlap, i.e. they are distinct.

Referring to Figs. 2 and 3a, the first primary sipe portion 521 comprises a first top hole 611, the first throat 612, and a first bottom cavity 613. The first bottom cavity 613 is delimited by a portion of the bottom 513 of the first sipe 500. The first throat 612 is arranged between the first top hole 611 and the first bottom cavity 613. The first top hole 611 opens to a surface of the tread 110 to receive the water and/or snow from the surface 900 while the tyre is running on the surface 900.

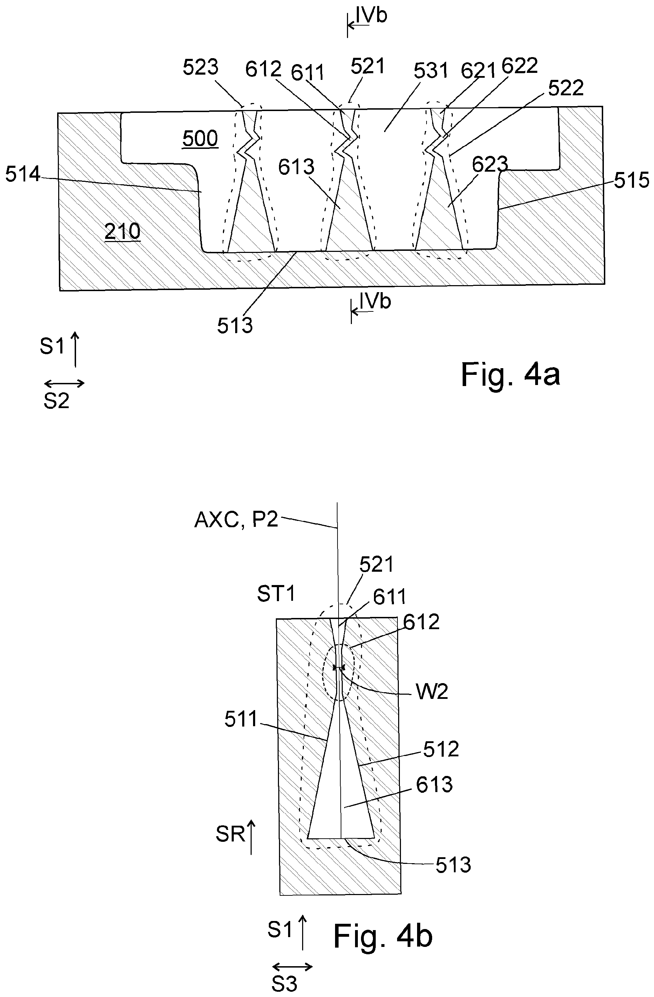

A shape of the first sipe 500, in particular the first throat 612 thereof, is designed so that in the first state ST1, the first throat 612 is open and thereby configured to allow fluid and/or snow to flow from the first top hole 611 to the first bottom cavity 613, and in the second state ST2, the first throat 612 inhibits (or is configured to inhibit) fluid and/or snow from flowing from the first bottom 613 cavity to the first top hole 611. A first embodiment for achieving this effect is shown in Figs. 2, 3a, and 3b; and a second embodiment for achieving this effect is shown in Figs. 4a to 4d.

However, as for the content of the material of which flow the first throat 612 is configure to allow/inhibit, the content depends on the use of the tyre. Irrespective of how the tyre is used, the shape of the first throat 612 is designed so that in the first state ST1, the first throat 612 is configured to allow fluid and/or snow to flow from the first top hole 611 to the first bottom cavity 613, and in the second state ST2, the first throat 612 is configured to inhibit fluid and/or snow from flowing from the first bottom 613 cavity to the first top hole 611. Herein the term "fluid and/or snow" covers also slush, which is a mixture of water and snow.

As shown in Fig. 3b, in an embodiment, in the second state ST2, the first throat 612 blocks fluid and/or snow from flowing from the first bottom 613 cavity to the first top hole 611 and also blocks fluid and/or snow from flowing from the first top hole 611 to the first bottom 613 cavity. However, as readable from Figs. 4a to 4d, the first throat 612 does not need to fully close in the second state ST2. A narrow channel may remain between the first top opening 611 and the first bottom cavity 613 also in the second state. In any case, also in the embodiment of Figs. 4a to 4d, in the second state ST2, the first throat 612 inhibits fluid and/or snow from flowing from the first bottom 613 cavity to the first top hole 611 and also inhibits fluid and/or snow from flowing from the first top hole 611 to the first bottom 613 cavity.

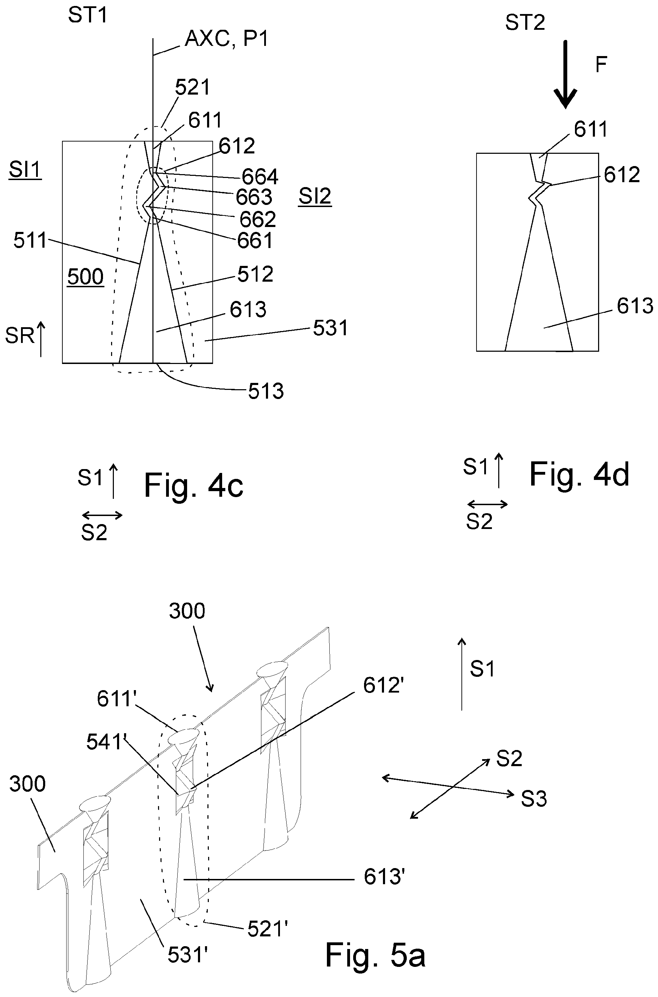

Common to both embodiments is that a flow channel provided by the first throat 612 is, in the first state ST1 wider than in the second state ST2 (or that in the second state ST2 the first throat 612 does not provide a flow channel at all). The narrowing/closing of the first throat 612 in the second state ST2 takes place by deformation of the tyre caused by a road contact of the tyre, as denoted by the load F in Figs. 3b and 4d.

In this way, at the onset of hitting a wet and/or snowy surface, the first sipe 500 of the tread block 210 is still in the first state ST1 and it is therefore able to receive water and/or snow from the surface. Moreover, the first bottom cavity 613 provides for a storage for receiving the water and/or snow from the wet or snowy surface and, because the first throat 612 is open, the water and/or snow flows through the first top hole 611 and the first throat 612 to the first bottom cavity 613.

However, when the tyre further rotates, the load F is imposed on the first tread block 210 thereby closing (fully as in Fig. 3b or partly as in Fig. 4d) the first throat 612. In this way, the water and/or snow stored in the first bottom cavity 613 does not escape the first bottom cavity 613 even if the compression caused by the force F would cause pressure to the first bottom cavity 613. Water and/or snow that would escape the sipe while the sipe is in road contact would deteriorate wet grip properties and/or snow grip properties of the tyre. In this way, the closing throat 612 improves wet grip and snow grip properties.

**If** the first sipe is not provided with end walls, some of the water and/or snow stored in the sipe could escape from a side of the sipe to a groove, to which a sipe without end walls would end. Thus, possibly, the technical effect provided by the functional first throat 612 is more prominent in such sipes that comprise end walls. Moreover, in general sipes having end walls do not soften the rubber material too much. Therefore, to improve handling of the tire, preferably, the sipes (or at least some of the sipes) have also end walls.

Therefore, in a preferable embodiment, the first sipe 500 is also delimited by a first end sipe wall 514 and a second end sipe wall 515. Reference is made to Fig. 2. **In** that embodiment, the first sipe 500 runs in its longitudinal direction S2 from the first end sipe wall 514 to the second end sipe wall 515. Moreover, the first end sipe wall 514 prevents fluid and/or snow stored in the first sipe 500 from escaping to a groove 120 of the tread. Likewise, the second end sipe wall 515 prevents fluid and/or snow stored in the first sipe 500 from escaping to another groove of the tread. Therefore, if pressure is applied to the first bottom cavity 613 the only way for the fluid and/or snow to escape therefrom would be a top opening of the first sipe 500. However, by the means disclosed above, such flow is inhibited in the second state ST2.

**In** order for the first bottom cavity 613 to serve as a reservoir for the fluid and/or snow (including slush), in a preferable embodiment, the first bottom 613 cavity tapers towards the first throat 612. **In** other words, the first bottom 613 cavity broadens towards the bottom 513. As shown e.g. in Fig. 3a, the tapering occurs at least in the direction S3, i.e. in a direction of a width of the first sipe 500. **In** other words, a width of the first bottom cavity 613 as measured in the direction S3 is less when measured at a location near the first throat 612 than when measured at a location near the bottom 513. However, as shown in Fig. 2, preferably, the tapering occurs also in the direction S2, i.e. in a direction of a length of the first sipe 500. **In** other words, a width of the first bottom cavity 613 as measured in the direction S2 is less when measured at a location near the first throat 612 than when measured at a location near the bottom 513. This ensures that the first bottom cavity 613 can receive a sufficient amount of the fluid and/or snow. However, instead of tapering, it is possible that a width of the first bottom cavity 613 (i.e. a first width W1) is constant. **In** such a case, in order for the first bottom cavity 613 to serve as a reservoir for the fluid and/or snow, the first width W1 of the first bottom cavity 613 is greater than a width WS2 (see Fig. 3c) of the first secondary sipe portion 531; both widths measured in the direction S3, i.e. in the direction of a width of the first sipe 500. In an embodiment, the first width W1 of the first bottom cavity 613 is 0.2 mm to 8 mm greater than the width WS2 (see Fig. 3c) of the first secondary sipe portion 531; both widths measured in the direction S3. Preferably, the first bottom 613 cavity tapers towards the first throat 612 and a width of the first bottom cavity 613 is greater than a width WS2 of the first secondary sipe portion 531. Concerning the definitions of the widths W1 and WS2, reference is made to Figs. 3a and 3c, respectively. Concerning the definitions of the first primary and first secondary sipe portions 521 and 532, reference is made to Fig. 2.

In an embodiment, a length of the first bottom cavity 613 measured in the longitudinal direction S2 of the sipe 500 is 4 mm to 20 mm, preferably 6 mm to 12 mm. These measures also ensure proper volume for storing fluid and/or snow in the bottom cavity 613.

In order to ensure that that first bottom cavity 613 receives fluid and/or snow from a reasonably large area of the ground, in an embodiment, the first top hole 611 tapers towards the first throat 612. In other words, the first top hole 611 broadens towards a surface of the tread 110. As shown e.g. in Fig. 3a, the tapering occurs at least in the direction S3, i.e. in a direction of a width of the first sipe 500. In other words, a width of the first top hole 611 as measured in the direction S3 is less when measured at a location near the first throat 612 than when measured at a location near the surface of the tread 110. However, as shown in Fig. 2, preferably, the tapering occurs also in the direction S2, i.e. in a direction of a length of the first sipe 500. In other words, a width of the top hole 611 as measured in the direction S2 is less when measured at a location near the first throat 612 than when measured at a location near the surface of the tread 110. Instead of tapering, it is possible that a width of the first top hole 611 (i.e. a third width W3) is constant. However, in such a case, in order for the first top hole to collect fluid and/or snow from a large area, the third width W3 of the first top hole 611 may be greater than the width WS2 of the first secondary sipe portion 531; both widths measured in the direction S3, i.e. in the direction of a width of the first sipe 500. In an embodiment, the third width W3 of the first top hole 611 is 0.2 mm to 4 mm greater than the width WS2 of the first secondary sipe portion 531; both widths measured in the direction S3.

Preferably, the first top hole 611 tapers towards the first throat 612 and a third width W3 of the first top hole 611 is greater than a width WS2 of the first secondary sipe portion 531. Both these aspects, separately and in combination, ensure that the first top hole 611 collects fluid and/or snow from a reasonably large area of the surface 900. Concerning the definitions of the widths W1 and WS2, reference is made to Figs. 3a and 3c, respectively. Concerning the definitions of the first primary and first secondary sipe portions 521 and 532, reference is made to Fig. 2. Concerning the relation of the width W1 of the first bottom cavity 613 and the width W3 of the first top hole 611, in an embodiment, the first width W1 of the first bottom cavity 613 is at least equal to the third width W3 of the first top hole 611.

Referring to Fig. 2, preferably the first sipe 500 comprises also another top hole, another throat, and another bottom cavity, which all function in the manner discussed above *mutatis mutandis.*

More specifically, in an embodiment the first sipe 500 comprises a second primary sipe portion 522. The first secondary sipe portion 531 is arranged between the first primary sipe portion 521 and the second primary sipe portion 522. The second primary sipe portion 522 comprises a second top hole 621, a second throat 622, and a second bottom cavity 623. The second bottom cavity 623 is delimited by a portion of the bottom 513. The second throat 622 is arranged between the second top hole 621 and the second bottom cavity 623. The second top hole 621 opens to a surface of the tread 110. Also the second throat 622 functions like the first throat 612. Thus, in the first state ST1, the second throat 622 is open, thereby being configured to allow fluid and/or snow to flow from the second top hole 621 to the second bottom cavity 623. In the second state ST2, the second throat is configured to inhibit fluid and/or snow from flowing from the second bottom cavity 623 to the second top hole 621.

Moreover, the first secondary sipe portion 531 of the first sipe 500 comprises a channel that allows for fluid and/or snow to flow between the first bottom cavity 613 and the second bottom cavity 623. This helps to balance the fluid/slush/snow flow between the first primary sipe portion 521 and the second primary sipe portion 522. As indicated in Figs. 2 and 3c, at least a bottom part of the first secondary sipe portion 531 may serve as the channel that allows for fluid and/or snow to flow between the first bottom cavity 613 and the second bottom cavity 623.

For manufacturing reasons, preferably the first secondary sipe portion 531 is manufacturable by a planar part of a lamella plate. As a result, in an embodiment, a width WS2 of the first secondary sipe portion 531 is constant. Thus, in a preferable embodiment, a width WS2 of the first sipe 500 is constant within the first secondary sipe portion 531 of the first sipe 500. However, if needed, the first secondary sipe portion 531 may be provided by locking elements (not shown) to lock the first sipe side wall 511 to the second sipe side wall 512 e.g. when shearing forces are applied, e.g. by braking or accelerating. Such locking elements may affect the width WS2 of the first secondary sipe portion 531 locally.

The functionality of the first throat 612 can be enabled e.g. by means of bends provided in the first throat 612. Thus, with reference to Figs. 3a and 4c, in an embodiment, the first throat 612 comprises a first bend 661, a second bend 662, and a third bend 663. These bends are defined such that the first bend 661 is arranged at a first radial distance from an axis of rotation AX of the tyre 100, the second bend 662 is arranged at a second radial distance from the axis of rotation AX of the tyre 100, and the third bend 663 is arranged at a third radial distance from the axis AX of rotation of the tyre 100. The first radial distance is smaller than the second radial distance and the second radial distance is smaller than the third radial distance. As shown in the figures, the first throat 612 may comprise a fourth bend 664 arranged radially further away from the axis of rotation than the third bend 663.

In Figs. 3a and 4c, the direction S1, which is a direction of a depth of the first sipe, is parallel to a radial direction SR of the tyre 100. However, if needed, the first sipe 500 may be slightly inclined. E.g. an angle of zero to 30 degrees may be arranged between the radial direction SR and the direction S1 of the depth of the first sipe 500. However, this does not affect the definition of the bends 661, 662, 663.

Moreover, as readable from the above, the first bend 661 is the one of the bends arranged deepest in the first sipe 500. Therefore, the first bottom cavity 613 extends from the first bend 661 to the bottom 513 of the first sipe 500.

Concerning the bends 661, 662, 663, their purpose is to change a direction of the flow channel formed by the first throat 612 such that when the force F is applied (i.e. in the second state ST2), the force F compresses the tyre and in this way closes (at least partly) the flow channel formed by the throat. A part of the deformation is caused by the elastic nature of the rubber material per se, whereby stress causes strain. A part of the deformation may be caused by the tyre being pneumatic or otherwise comprising gas-filled cavities, whereby the shape of the tyre locally changes because of the air/gas flowing inside the tyre, i.e. the shape of the tyre changes without substantial elastic deformation of the material as *such;* instead the cavity delimited by the tyre (e.g. a cavity delimited by the pneumatic tyre and the rim in combination) deforms. Thus, when the direction of the flow channel changes, e.g. an upper part of the first throat 612 may come into contact with a lower part of the first throat 612 in the second state ST2 as shown in Fig. 3b.

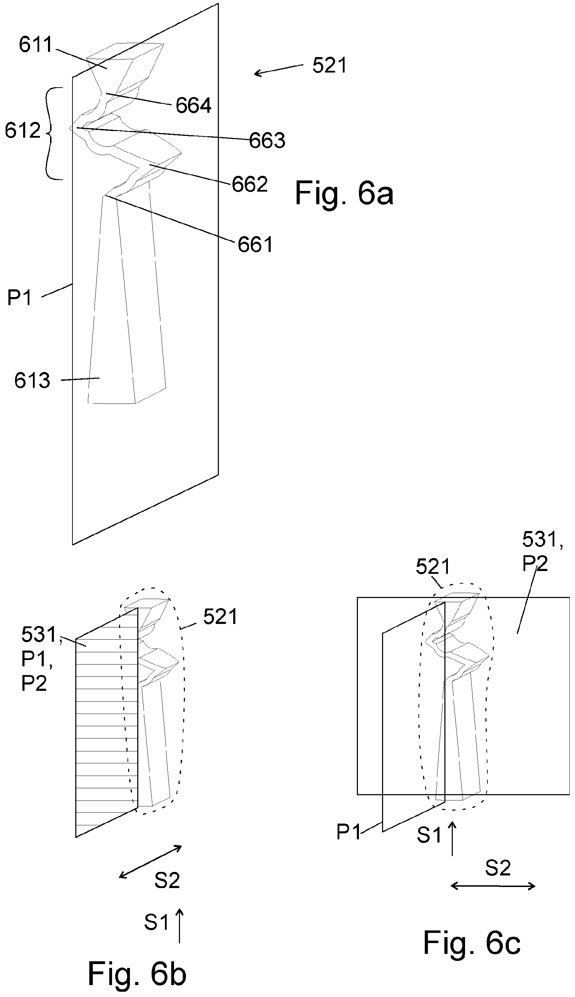

Thus, in an embodiment, the first throat 612 is configured such that the second bend 662 and the third bend 663 are arranged on different sides of a first plane P1 that comprises a direction that is parallel to a direction of depth of the first sipe 500. The first plane P1 is shown in Figs. 3a and 4c as well as in Figs. 6a to 6c.

More specifically, in an embodiment, the first bottom cavity 613 extends from the first bend 661 of the first throat 612 to the bottom 513 of the first sipe 500 laterally surrounding a central axis AXC of the first bottom cavity 613. The first plane P1 identified above, is a plane comprising the central axis AXC of the first bottom cavity 613, as shown in Figs. 3a, 4c, and 6a to 6c.

In an embodiment, at a location of the second bend 662, a part of the first throat 612 is arranged on a first side SI1 of the first plane P1, which comprises the central axis AXC of the first bottom cavity 613. Moreover, at a location of the third bend 663, a part of the first throat 612 is arranged on a second side SI2 of the first plane P1. Reference is made to Fig. 3a and Fig. 4c. As shown therein, the first and second sides (SI1, SI2) are different sides of the first plane P1.

Preferably, the first throat 612 bends a sufficiently large distance. Therefore, preferably, at the location of the second bend 662, the part of the first throat 612 that is arranged on the first side SI1 of the first plane P1 is arranged at least 0.5 mm apart from the first plane P1. Moreover, at the location of the third bend 663, the part of the first throat 612 that is arranged on the second side SI2 of the first plane P1, is arranged at least 0.5 mm apart from the first plane P1. Reference is made to Figs. 3a and Fig. 4c. As readable from the above and from Figs. 3a and 4c herein the location of a bend refers particularly to the position of the bend as measured in the radial direction SR (applicable to all bends 661, 662, 663, 664). Because of the bends, the location of the first throat 612 in a direction that is perpendicular to a direction of depth of the first sipe depends on the radial location at which the position of the first throat 612 is defined.

In a preferable embodiment, at the location of the second bend 662, no part of the first throat 612 is arranged on the second side SI2 of the first plane P1. In other words, at the radial location of the second bend 662, the whole cross section of the first throat 612 is arranged on the first side SI1 of the first plane P1. The cross section herein refers to a cross section of the first throat 612, the cross section being on a plane that has a normal in the direction of depth of the first sipe 500 and that is taken in the radial location of the second bend 662. Thus, at the level of the second bend 662 the whole first throat 612 is on the first side SI1 of the plane P1. Reference is made to Figs. 3b and 4c. Likewise, preferably, at the location of the third bend point 663, no part of the first throat 612 is arranged on the first side SI1 of the first plane P1. In other words, at the radial location of the third bend 663, the whole cross section of the first throat 612 is arranged on the second side SI2 of the first plane P1. What has been said about the cross section above applies *mutatis mutandis.* Reference is made to Figs. 3b and 4c.

As for the direction of the plane P1, Figs. 2 and 3a show an embodiment, wherein a normal of the first plane P1 is parallel to a direction S3 of a width of the first sipe 500. In this embodiment, the first throat 612 may fully close in the second state ST2.

However, Figs. 4a to 4c show an embodiment, wherein a normal of the first plane P1 is parallel to a direction S2 of a length of the first sipe 500. In this embodiment, the first throat 612 does not necessarily fully close in the second state ST2. Namely as readable from Fig. 4a to 4c, even if the zig-zag pattern formed by parts of the first throat 612 will fully close, still a substantially straight part of the first throat 612 will remain in the centre of the first throat, as shown in Fig. 4b. A load F does not necessarily close this part of the first throat 612, even is the load F would close the zig-zag part of the first throat 612 as shown in Figs. 4c and 4d. However, a shear force caused e.g. by braking or acceleration may cause also the central part of the first throat shown in Fig. 4b to close.

It is noted that in the embodiment of Fig. 4a, the first secondary sipe portion 531 is substantially similar to that of the embodiment of Fig. 2. Thus, a cross section of the first secondary sipe portion 531 of the embodiment of Fig. 4a would look similar to that shown in Fig. 3c.

Concerning this aspect, Fig. 6a shows a first primary sipe portion 521 in a perspective view. The first throat 612 as well as the bends 661, 662, 663, 664 thereof have also been depicted. In addition, the plane P1 has also been indicated.

The primary first primary sipe portion 521, particularly the plane P1 defined by the primary first primary sipe portion 521, can be substantially at any angle relative to the direction S3 of the thickness of the sipe. For example, Fig. 6b shows schematically the combination of the first primary sipe portion 521 of Fig. 6a and a planar first secondary sipe portion 531 as shown in Figs. 3a to 3d. As another example, Fig. 6c shows schematically the combination of the first primary sipe portion 521 of Fig. 6a and a planar first secondary sipe portion 531 as shown in Figs. 4a to 4d.

In line with the above, the central axis AXC of the first bottom cavity 613 is arranged within a second plane P2 that comprises also a direction S2 of a length of the first sipe 500. Also the second plane P2 is shown in Figs. 3a and 6b. The second plane P2 is also shown in Figs. 4b and 6c.

As readable from the above, in the embodiment of Figs. 2 and 3a, an angle between a normal of the first plane P1 and a normal of the second plane P2 is zero. I.e. the first plane P1 and the second plane P2 are the same planes (they both comprise the central axis AXC of the first bottom cavity 613 and have same normal). This is shown also in Fig. 6b. As readable from the above, in the embodiment of Figs. 4a to 4c, an angle between a normal of the first plane P1 and a normal of the second plane P2 is 90 degrees. This is shown also in Fig. 6c. Naturally, an angle between a normal of the first plane P1 and a normal of the second plane P2 may be anything between 0 and 90 degrees (not shown). However, for reasons of manufacturability of the lamella plate 300 usable for forming the first sipe 500, preferably, the angle between the normal of the first plane P1 and the normal of the second plane P2 is 0 degrees or 90 degrees. Moreover, as discussed above, the functionality of the first throat 612 may be better, i.e. the first throat 612 may more easily fully close in the second state, if the plane P1 and P2 are the same planes or angle between a normal of the first plane P1 and a normal of the second plane P2 is less than 30 degrees. (In case the planes are the same, which is also preferable, the angle, if definable, would be zero).

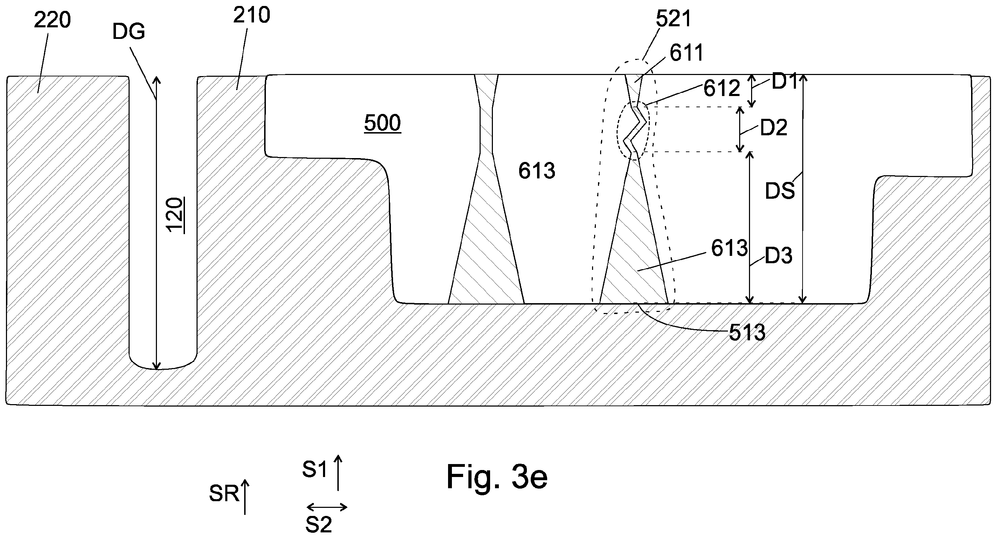

The functioning of the first throat 612 may depend on measures of the first primary sipe portion 521. Referring to Figs. 3d and 3e, the first top hole 611 has a first depth D1, the first throat 612 has a second depth D2, and the first bottom cavity 613 has a third depth D3. In an embodiment, these parts form the first primary sipe portion 521. Therefore, a depth DS of the first primary sipe portion 521 equals a sum D1+D2+D3 of the first, the second, and the third depths D1, D2, D3. The depths D1, D2, D3, and DS are all defined in the direction S1, i.e. in the direction of depth of the first sipe 500. The relation of the direction S1 and the radial rection SR has been discussed above. Even if the depths are only shown in Figs. 3d and 3e, these depths apply also in the context of the embodiment of Figs. 4a to 4d. These measures are applicable in the first state ST1, i.e. in the unloaded state. In an embodiment, the tread 110 of the tyre 100 further has a groove 120, of which a part is arranged between the tread block 210 and another tread block 220. Reference is made to Fig. 3e. In an embodiment, a depth DG of the groove 120 is at least equal to the depth DS of the first primary sipe portion. Preferably, the depth DG of the groove 120 is greater than the depth DS of the first primary sipe portion.

In an embodiment, the first depth D1 is 10 % to 30 % of the depth DS of the first primary sipe portion 521.

This range is beneficial for at least two reasons. First, the lower limit 10 % has been found suitably large for the function of the first top hole 611, which is collecting water and/or snow from the surface on which the tyre is used. A reasonably high first top hole 611, in particular when the first top hole 611 tapers towards the first throat 612, ensures proper flow a the water and/or snow within the first top hole 611. On the other hand, the upper limit 30 % has been found suitably small for the function of the other parts of the first primary sipe portion 521. Notably, the first bottom cavity 613 should be reasonably high for storing a substantial amount of water and/or snow. Moreover, a functional first throat 612 may be hard to manufacture if a height thereof is too small. Therefore, the first top hole 611 should not take up too much of the depth of the sipe. Finally, the depth of the first top hole 611 also affects the stiffness of the tread block 210 comprising the first sipe 500 having the first primary sipe portion 521. An the depth mentioned above is optimal in view of this, too. Furthermore, the lower limit of 10 % ensures that even if the tyre wears a certain degree, the first top hole 611 still functions as desired.

In an embodiment, the second depth D2 (i.e. the depth of the first throat 612) is 15 % to 50 % of the depth DS of the first primary sipe portion 521, which equals a sum D1+D2+D3. This has the effect that the zig-zag pattern formed by the bends 661, 662, 663, 664 of the first throat 612 are sufficiently steep for closing the first throat 612 in the second state ST2.

The steepness is also related to the amplitude of the zig-zag pattern of the first throat 612. Therefore, in an embodiment:
- the second depth D2 (i.e. the depth of the first throat 612) is 15 % to 50 % of the depth DS of the first primary sipe portion,
- at the location of the second bend 662, the part of the first throat 612 that is arranged on the first side SI1 of the first plane P1 is arranged at least 0.5 mm apart from the first plane P1, and
- at the location of the third bend 663, the part of the first throat 612 that is arranged on the second side SI2 of the first plane P1 is arranged at least 0.5 mm apart from the first plane P1.

The closing of the first throat 612 caused by the load and the zig-zag pattern (i.e. the bends 661, 662, 663, 664) is also related to a second width W2 of the first throat 612. In an embodiment, a second width W2 of the first throat 612 is 0.3 mm to 1.0 mm, when the tread block 210 is in the first state ST1. Herein the term second width is used to differentiate from the first width, which is the first width of the bottom cavity 613. To avoid confusion, a "first width" is not used in connection with the first throat.

Figures 3a and 4b show the second width W2 of the first throat 612. As depicted in these figures, the second width W2 of the first throat 612 is measurable in a direction that is normal to a surface of the sipe wall 511, 512 defining the first throat 612 at the location of measuring the second width. Depending on the orientation of the zig-zag form of the first throat, a direction of the second width may be parallel to a direction of width of the first sipe 500, as in Fig. 4b, or the direction of the second width may be inclined relative to a direction of width of the first sipe 500, as in Fig. 3a according to the shape of first throat 612 at that point.

The closing of the first throat 612 caused by the load and the zig-zag pattern (i.e. the bends 661, 662, 663, 664) is also related to the second width W2 of the first throat 612.

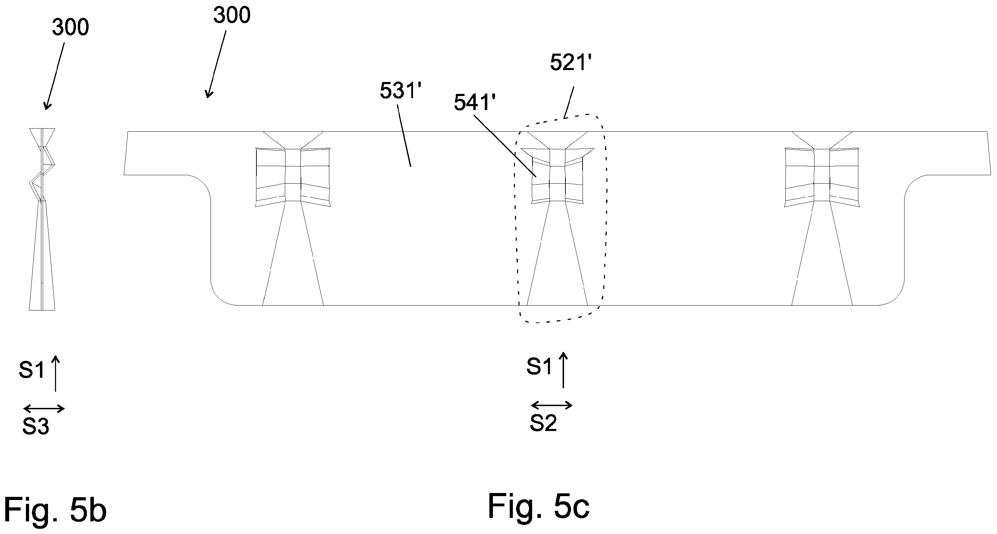

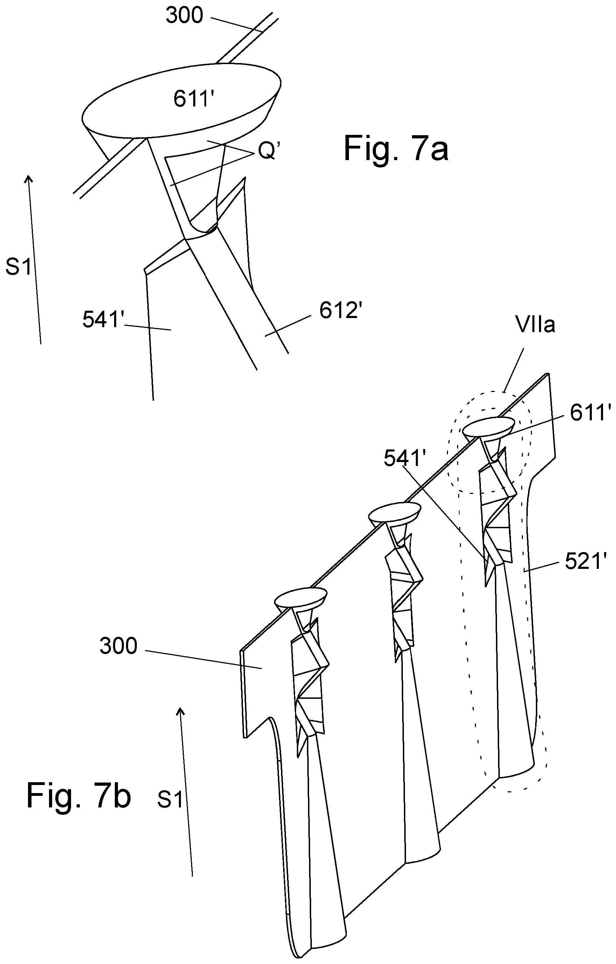

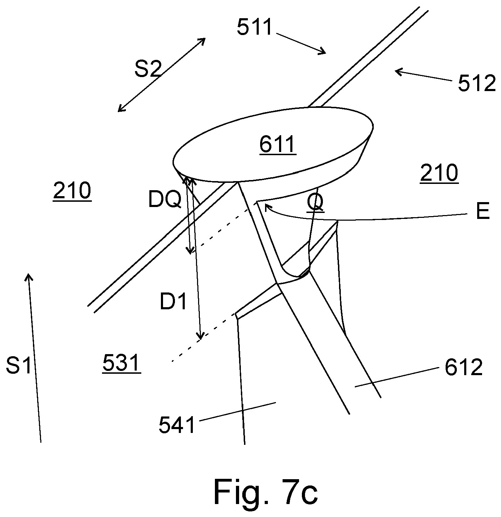

Furthermore, if a width of the sipe 500 near the first throat 612 is greater than the second width W2 of the first throat 612, there is a certain risk that the water and/or snow entering the sipe 500 will bypass the first throat 612, whereby the first primary sipe portion 521 does not necessarily easily function as desired. More precisely, in an embodiment, a first transition portion 541 is arranged between the first throat 612 and the first secondary sipe portion 531. Reference is made to Figs. 2 and 7c. Moreover, the first transition portion 541 is manufacturable by a transition part 541' of a lamella plate 300 as shown in Figs. 5a, 5c, and 7b. For the reasons discussed above, preferably a width of the first transition portion 541 is less than or equal to the second width W2 of the first throat 612. I.e. the second width W2 of the first throat 612 is greater than the width of the first transition portion 541. This solution functions particularly well at least in such embodiments, wherein bends 662, 663 are arranged on different sides of the plane P1 that has a normal to a direction S3 that is parallel with a direction of a width of the sipe. Notably, the width of the first transition portion 541 may be less than the width WS2 of the first secondary sipe portion 531, at least if the width WS2 is from the upper range of the limits given above for the primary width of the sipe 500. However, if the width WS2 is from the lower range of the limits given above for primary width of the sipe 500, the width of the first transition portion 541 may be at least equal to the width WS2 of the first secondary sipe portion 531. However, preferably the second width W2 of the first throat 612 is greater than or equal to the width of the first transition portion 541. Herein the width W2 of the throat and the width of the transition portion 541 refer to these widths in the first state ST1.

Therefore, in an embodiment:
- a second width W2 of the first throat 612 is 0.3 mm to 1.0 mm and/or the second width W2 is greater than the width of the first transition portion 541,
- at the location of the second bend 662, the part of the first throat 612 that is arranged on the first side SI1 of the first plane P1 is arranged at least 0.5 mm apart from the first plane P1, and
- at the location of the third bend 663, the part of the first throat 612 that is arranged on the second side SI2 of the first plane P1 is arranged at least 0.5 mm apart from the first plane P1.

Preferably, in addition, the second depth D2 (i.e. the depth of the first throat 612) is 15 % to 50 % of the depth DS of the first primary sipe portion to ensure proper steepness for the zig-zag shape of the first throat 612.

The functionality of the first throat 612 as well as the tyre 100 as such are related to regular use of the tyre. If the tyre is a pneumatic tyre, in regular use, the tyre is inflated to a use pressure. The use pressure may depend on the type of the tyre and the vehicle on which the tyre is used. Moreover, the load F caused by the vehicle to the tyre is related to a weight of the vehicle and load carried by the vehicle as well as a number of tyres the vehicle has (typically four).

In general, in an embodiment, the tread block 210 is configured to be in the first state ST1, when the tread block 210 is exposed to atmosphere and the tread block 210 is configured to be in the second state ST2, when the tread block 210 is in contact with a flat load-bearing surface 900, such as road, and the tyre carries a load of at least 2 kN (kilo Newton). More precisely, tread block 210 is configured to be in the second state ST2, when the tread block 210 is in contact with the flat load-bearing surface 900, such as road; the tyre carries the load of at least 2 kN (kilo Newton); and the vehicle that is equipped with the tyre *is not* in a state of acceleration or deceleration, i.e. when shear forces are not imposed on the tread block 210. Naturally, the tread block 210 is configured to be in the second state ST2, also when the tread block 210 is in contact with the flat load-bearing surface 900, such as road; the tyre carries the load of at least 2 kN (kilo Newton); and the vehicle that is equipped with the tyre is in a state of acceleration or deceleration, i.e. shear forces are imposed on the tread block. However, some previously known sipes may partially close because of a shear force caused by acceleration or deceleration.

Typically the tyre is a pneumatic tyre. In such a case, the tread block 210 is configured to be in the first state ST1, when the tyre 100 is inflated and the tread block 210 is exposed to atmosphere. Preferably, the tread block 210 is configured to be in the first state ST1 also, when the tyre 100 is not inflated and the tread block 210 is exposed to atmosphere. Oftentimes, if the tread block 210 is configured to be in the first state ST1 also when the tyre 100 is not inflated and the tread block 210 is exposed to atmosphere. Inflation of the tyre normally does not close the first throat 612 even partially.

Furthermore, the tread block 210 is configured to be in the second state ST2, when the tyre 100 is inflated and the tread block 210 is in contact with a flat load-bearing surface 900, such as road, and the tyre carries a load of at least 2 kN (kilo Newton) by said contact with the flat load-bearing surface 900. A load of 2 kN per tyre, if there are four tyres equally loaded in the vehicle, corresponds to a total load of 8 kN, i.e. about 800 kg. Thus roughly corresponds a light passenger vehicle. Typically, if a certain force enables the second state ST2, also all higher load will enable the second state ST2. Therefore there seems no need to define an upper limit for the load. An upper limit could be e.g. 15 kN per tyre. As indicated above, in an embodiment, the tread block 210 is configured to be in the second state ST2,
- when the tread block 210 is in contact with the flat load-bearing surface 900, such as road
- the tyre carries the load of at least 2 kN (kilo Newton); and
- the vehicle that is equipped with the tyre *is not* in a state of acceleration or deceleration.

The tread block 210 may configured to be in the second state ST2 also when the vehicle that is equipped with the tyre is in a state of acceleration or deceleration.

Concerning the degree of inflation of a pneumatic tyre, in an embodiment the tread block 210 is configured to be in the first state ST1, when the tyre 100 is inflated with a pressure of 1.5 bar(g) to 5 bar(g) and the tread block 210 is exposed to atmosphere. Furthermore, the tread block 210 is configured to be in the second state ST2, when the tyre 100 is inflated with a pressure of 1.5 bar(g) to 5 bar(g) and the tread block 210 is in contact with a flat load-bearing surface 900, such as road, and the tyre carries a load of at least 2 kN by said contact with the flat load-bearing surface 900. The unit bar(g) is a gauge pressure in bars, i.e. an overpressure relative to atmospheric pressure.

What has been said about the functioning of the first throat 612 applies *mutatis mutandis* to the second throat 622, if the first sipe 500 comprises the second throat 622. Moreover, as shown in Figs. 2 and 4a, in an embodiment, the first sipe 500 further comprises a third primary sipe portion 523. Without showing the reference numbers, the third primary sipe portion 523 comprises a third top hole, a third throat, and a third bottom cavity. The third top hole, the third throat, and the third bottom cavity function in a similar manner as the first top hole 611, the first throat 612, and the first bottom cavity 613 *mutatis mutandis.*

Even if not shown, in an embodiment, the tread block 210 comprises a further sipe comprising a further first primary sipe portion and a further first secondary sipe portion. The further first primary sipe portion and the further first secondary sipe portion function like the first primary sipe portion 521 and the first secondary sipe portion 531. In addition the further tread block 220 may comprise further sipes having further first primary sipe portion and the further first secondary sipe portion functioning as discussed above.

In general, the first sipe 500 can be manufactured by inserting a lamella plate 300, such as one of Fig. 5a, to a green tyre, and after curing the tyre, removing the lamella plate 300 from the tyre 100.

Therefore, the invention relates to a lamella plate 300. The lamella plate 300 is configured to be inserted into a tread block of a green tyre of a tread block of a green tread band to form to a tread block 210 of a tyre 100 or a tread band.

The lamella plate 300 has such a shape that the tread block 210 comprises the first sipe 500 as discussed above. In an embodiment, the tread block 210 comprises the first sipe side wall 511, the second sipe side wall 512, and the bottom 513 delimiting the first sipe 500. The tread block 210 provided with the first sipe 500 is configured to be in regular use of the tyre alternately in the first state ST1 and in the second state ST2. The first sipe side wall 511 and the second sipe side wall 512 define the first primary sipe portion 521 and the first secondary sipe portion 531. The first primary sipe portion 521 comprises the first top hole 611, the first throat 612, and the first bottom cavity 613, the first bottom cavity 613 being delimited by a portion of the bottom 513, and the first throat 612 being arranged between the first top hole 611 and the first bottom cavity 613. Moreover, in the first state ST1, the first sipe 500 is arranged so that the first throat 612 is open, whereby the first throat is configured to allow fluid and/or snow to flow from the first top hole 611 to the first bottom cavity 613, and in the second state ST2, the first sipe 500 is arranged so that the first throat 612 is configured to inhibit fluid and/or snow from flowing from the first bottom 613 cavity to the first top hole 611.

For example, the part 521' of the lamella plate 300 (e.g. of Figs. 5a to 5c) is configured to form first primary sipe portion 521 of the sipe 500, and the part 531' of the lamella plate 300 (e.g. of Figs. 5a to 5c) is configured to form the first secondary sipe portion 531 of the sipe 500. Likewise, the part 611' of the lamella plate 300 of Figs. 5a-5c is configured to form the first top hole 611 of the first sipe 500; the part 612' is configured to form the first throat 612 of the first sipe 500; and the part 613' is configured to form the first bottom cavity 613 of the first sipe 500. Moreover, transition part 541' of a lamella plate 300 is configured to form the first transition portion 541 as detailed above. Embodiments of the lamella plate 300 are shaped so as to form any embodiment of the first sipe 500 as disclosed in detail above.

The invention also relates to a use of such a lamella plate 300. In the use, the lamella plate 300 is used for producing a tyre 100 (i.e. any embodiment of a tyre as disclose hereinabove).

In the claimed invention, the first top hole 611 is provided with a step Q (see Fig. 7c). A technical function of the step Q is to provide an additional grip edge for the tread. In particular, the step Q is located on a different radial level than the top opening of the first sipe 500, which impact the grip of the tread.

A lamella plate 300 for forming such a first sipe is shown in Fig. 7b. As shown in Fig. 7b, the lamella plate 300 comprises a part 521' for forming the first primary sipe portion 521. The part 521' comprises a part 611' for forming the first top hole 611. Fig. 7a shows an enlargement of the part 611'. The part Q' shown in Fig. 7a is configured to form the step Q shown in Fig. 7c.

Fig. 7c shows a part of a tread block 210 that includes a sipe being formed by the lamella plate 300 of Fib. 7b. As defined above, the first top hole 611 has the first depth D1, which is also shown in Fig. 7c. In the embodiment of Fig. 7c, the second sipe side wall 512 comprises a step Q that limits the first top hole 611. Naturally only the first sipe side wall 511 could comprise such a step Q, or both the first sipe side wall 511 and the second sipe side wall 512 could comprise such steps Q. In an embodiment, the step Q is arranged at a depth DQ that is 10 to 75 % of the first depth D1.

In the embodiment of Fig. 7c, an edge E of the step Q extends in a longitudinal direction S2 of the first sipe 500. As readable from Figs. 7b and 5a, the lamella plate 300 of Fig. 7b is substantially similar to the lamella plate of Fig. 5a; however, a part Q' (shown in Fig. 7a) has been provided to form the step Q of the first sipe 500.

However, following similar principles, a lamella plate 300 for manufacturing the sipe 500 of Figs. 4a and 6a can also be provided with a step Q or steps Q. For examples steps Q could be arranged to both the first sipe side wall 511 and the second sipe side wall 512. Both of these steps could have an edge E that extends in the direction S3 of a width of the sipe 500.

Moreover, the direction of the edge E of the step Q (or the edges E of the steps Q) could be designed so that is form a predetermined angle with a direction of rotation of the tyre. Thus, a direction of the edge E does not need to be parallel or perpendicular to the longitudinal direction S2 of the sipe.

## Claims

1. A tyre (100) comprising
- a tread (110) comprising a tread block (210), the tread block (210) delimiting a first sipe (500), wherein
- the tread block (210) is configured to be alternately in a first state (ST1) and in a second state (ST2),
- the first sipe (500) comprises a first primary sipe portion (521) and a first secondary sipe portion (531),
- the first primary sipe portion (521) comprises a first top hole (611), a first throat (612), and a first bottom cavity (613), the first bottom cavity (613) being delimited by a portion of the bottom (513), and the first throat (612) being arranged between the first top hole (611) and the first bottom cavity (613), wherein
- the first throat (612) provides such a flow channel that in the first state (ST1) the flow channel is wider than in the second state (ST2) or that in the second state (ST2) the first throat (612) does not provide a flow channel, the narrowing or the closing of the of the first throat (612) in the second state (ST2) taking place by deformation of the tyre caused by a road contact of the tyre, whereby
- in the first state (ST1), the first throat (612) is configured to allow fluid and/or snow to flow from the first top hole (611) to the first bottom cavity (613), and
- in the second state (ST2), the first throat (612) is configured to inhibit fluid and/or snow from flowing from the first bottom cavity (613) to the first top hole (611), **characterized in that**
- at least one of a first sipe side wall (511) and a second sipe side wall (512), which delimit the first sipe (500), comprises a step (Q) that limits the first top hole (611).

2. The tyre (100) of claim 1, wherein
- the first sipe (500) is delimited by a bottom (513), a first sipe side wall (511), a second sipe side wall (512), a first end sipe wall (514) and a second end sipe wall (515).

3. The tyre (100) of claim 1 or 2, wherein
- the first bottom cavity (613) tapers towards the first throat (612) and/or
- a first width (W1) of the first bottom cavity (613) is greater than a width (WS2) of the first secondary sipe portion (531), for example, 0.2 mm to 8 mm greater.

4. The tyre (100) of any of the claims 1 to 3, wherein
- the first top hole (611) tapers towards the first throat (612) and/or
- a third width (W3) of the first top hole (611) is greater than a/the width (WS2) of the first secondary sipe portion (531), for example, 0.2 mm to 4 mm greater.

5. The tyre (100) of any of the claims 1 to 4, wherein the first sipe (500) further comprises
- a second primary sipe portion (522) comprising a second top hole (621), a second throat (622), and a second bottom cavity (623), the second bottom cavity (623) being delimited by a portion of the bottom (513), and the second throat (622) being arranged between the second top hole (621) and the second bottom cavity (623), wherein
- the first secondary sipe portion (531) is arranged between the first primary sipe portion (521) and the second primary sipe portion (522),
- in the first state (ST1), the first sipe (500) is arranged so that the second throat (622) is configured to allow fluid and/or snow to flow from the second top hole (621) to the second bottom cavity (623), and
- in the second state (ST2), the first sipe (500) is arranged so that the second throat is configured to inhibit fluid and/or snow from flowing from the second bottom cavity (623) to the second top hole (621), wherein
- the first secondary sipe portion (531) of the first sipe (500) comprises a channel that allows for fluid and/or snow to flow between the first bottom cavity (613) and the second bottom cavity (623);
preferably,
- a width (WS2) of the first sipe (500) is constant within the first secondary sipe portion (531).

6. The tyre (100) of any of the claims 1 to 5, wherein
- the first throat (612) comprises a first bend (661), a second bend (662), and a third bend (663),
- the first bend (661) is arranged at a first radial distance from an axis of rotation (AX) of the tyre (100),
- the second bend (662) is arranged at a second radial distance from the axis of rotation (AX) of the tyre (100),
- the third bend (663) is arranged at a third radial distance from the axis (AX) of rotation of the tyre (100),
- the first radial distance is smaller than the second radial distance,
- the second radial distance is smaller than the third radial distance, and
- the first bottom cavity (613) extends from the first bend (661) to the bottom (513) of the first sipe (500).

7. The tyre (100) of the claim 6, wherein
- the first bottom cavity (613) extends from the first bend (661) of the first throat (612) to the bottom (513) of the first sipe (500) laterally surrounding a central axis (AXC) of the first bottom cavity (613),
- at a location of the second bend (662), a part of the first throat (612) is arranged on a first side (SI1) of a first plane (P1) comprising the central axis (AXC) of the first bottom cavity (613), and
- at a location of the third bend (663), a part of the first throat (612) is arranged on a second side (SI2) of the first plane (P1), wherein
- the first and second sides (SI1, SI2) are different sides of the first plane (P1);
preferably,
- at the location of the second bend (662), the part of the first throat (612) is arranged on the first side (SI1) of the first plane (P1) at least 0.5 mm apart from the first plane (P1), and
- at the location of the third bend (663), the part of the first throat (612) is arranged on the second side (SI2) of the first plane (P1) at least 0.5 mm apart from the first plane (P1).

8. The tyre (100) of the claim 7, wherein
- at the location of the second bend (662), no part of the first throat (612) is arranged on the second side (SI2) of the first plane (P1) and
- at the location of the third bend point (663), no part of the first throat (612) is arranged on the first side (SI1) of the first plane (P1).

9. The tyre (100) of the claim 7 or 8, wherein
- the central axis (AXC) of the first bottom cavity (613) is arranged within a second plane (P2) that comprises also a direction (S2) of a length of the first sipe (500), and
- [i] the second plane (P2) is the same plane of the first plane (P1) or [ii] an angle between a normal of the first plane (P1) and a normal of the second plane (P2) is 90 degrees or between 0 and 90 degrees.

10. The tyre (100) of any of the claims 1 to 9, wherein
- the tread block (210) is configured to be in the first state (ST1), when the tread block (210) is exposed to atmosphere, and
- the tread block (210) is configured to be in the second state (ST2), when the tread block (210) is in contact with a flat load-bearing surface (900), such as road, and the tyre (100) carries a load of at least 2 kN by said contact with the flat load-bearing surface (900);
preferably the tyre (100) is a pneumatic tyre and
- the tread block (210) is configured to be in the first state (ST1), when the tyre (100) is inflated and the tread block (210) is exposed to atmosphere, and
- the tread block (210) is configured to be in the second state (ST2), when the tyre (100) is inflated and the tread block (210) is in contact with a flat load-bearing surface (900), such as road, and the tyre carries a load of at least 2 kN by said contact with the flat load-bearing surface (900).

11. The tyre (100) of any of the claims 1 to 10, wherein
- the first top hole (611) has a first depth (D1),
- the first throat (612) has a second depth (D2), and
- the first bottom cavity (613) has a third depth (D3), such that
- a depth (DS) of the first primary sipe portion (521) equals a sum (D1+D2+D3) of the first, the second, and the third depths (D1, D2, D3), wherein
- the first depth (D1) is 10 % to 30 % of the depth (DS) of the first primary sipe portion (521) and/or
- the second depth (D2) is 15 % to 50 % of the depth (DS) of the first primary sipe portion.

12. The tyre of any of the claim 1 to 11, wherein
- a second width (W2) of the first throat (612) is 0.3 mm to 1.0 mm, when the tread block (210) is in the first state (ST1) and/or
- the second width (W2) is greater than a width of a first transition portion (541), when the tread block (210) is in the first state (ST1), wherein the first transition portion (541) is arranged between the first throat (612) and the first secondary sipe portion (531).

13. The tyre of any of the claim 1 to 12, wherein
- the first top hole (611) has a first depth (D1) and
- the step (Q) is arranged at a depth (DQ) that is 10 to 75 % of the first depth (D1);
preferably,
- an edge (E) of the step (Q) extends in a longitudinal direction (S2) of the first sipe (500) or
- an edge (E) of the step (Q) extends in a direction (S3) of a width of the first sipe (500).

14. A lamella plate (300) configured to be inserted into an uncured tread block to form a tread block (210), the lamella plate (300) being shaped such that the tread block (210) delimits a first sipe (500), wherein
- the tread block (210) provided with the first sipe (500) is configured to be alternately in a first state (ST1) and in a second state (ST2),
- the first sipe (500) comprises a first primary sipe portion (521) and a first secondary sipe portion (531),
- the first primary sipe portion (521) comprises a first top hole (611), a first throat (612), and a first bottom cavity (613), and the first throat (612) being arranged between the first top hole (611) and the first bottom cavity (613), wherein
- the first throat (612) provides such a flow channel that in the first state (ST1) the flow channel is wider than in the second state (ST2) or that in the second state (ST2) the first throat (612) does not provide a flow channel, the narrowing or the closing of the of the first throat (612) in the second state (ST2) taking place by deformation of the tyre caused by a road contact of the tyre, whereby
- in the first state (ST1), the first throat (612) is configured to allow fluid and/or snow to flow from the first top hole (611) to the first bottom cavity (613), and
- in the second state (ST2), the first throat (612) is configured to inhibit fluid and/or snow from flowing from the first bottom (613) cavity to the first top hole (611), **characterized in that**
- the lamella plate (300) is configured to form such a first sipe (500) that at least one of a first sipe side wall (511) and a second sipe side wall (512), which delimit the first sipe (500), comprises a step (Q) that limits the first top hole (611).

15. Use of the lamella plate of claim 14 for producing the tyre (100) of any of the claims 1 to 13.

## Patentansprüche

1. Ein Reifen (100), umfassend
- eine Lauffläche (110), die einen Laufflächenblock (210) umfasst, wobei der Laufflächenblock (210) eine erste Lamelle (500) begrenzt, wobei
- der Laufflächenblock (210) dazu konfiguriert ist, sich abwechselnd in einem ersten Zustand (ST1) und in einem zweiten Zustand (ST2) zu befinden,
- die erste Lamelle (500) einen ersten primären Lamellenabschnitt (521) und einen ersten sekundären Lamellenabschnitt (531) umfasst,
- der erste primäre Lamellenabschnitt (521) eine erste obere Öffnung (611), einen ersten Hals (612) und einen ersten unteren Hohlraum (613) umfasst, wobei der erste untere Hohlraum (613) durch einen Abschnitt des Bodens (513) begrenzt ist und der erste Hals (612) zwischen der ersten oberen Öffnung (611) und dem ersten unteren Hohlraum (613) angeordnet ist, wobei
- der erste Hals (612) einen derartigen Strömungskanal bereitstellt, dass der Strömungskanal im ersten Zustand (ST1) breiter als im zweiten Zustand (ST2) ist, oder dass der erste Hals (612) im zweiten Zustand (ST2) keinen Strömungskanal bereitstellt, wobei die Verengung oder das Schließen des ersten Halses (612) im zweiten Zustand (ST2) durch eine Verformung des Reifens erfolgt, die durch einen Straßenkontakt des Reifens verursacht wird, wodurch
- der erste Hals (612) im ersten Zustand (ST1) dazu konfiguriert ist, zuzulassen, dass Fluid und/oder Schnee von der ersten oberen Öffnung (611) zu dem ersten unteren Hohlraum (613) strömt, und
- der erste Hals (612) im zweiten Zustand (ST2) dazu konfiguriert ist, zu hemmen, dass Fluid und/oder Schnee von dem ersten unteren Hohlraum (613) zu der ersten oberen Öffnung (611) strömt,
**dadurch gekennzeichnet, dass**
- mindestens eine von einer ersten Lamellenseitenwand (511) und einer zweiten Lamellenseitenwand (512), welche die erste Lamelle (500) begrenzen, eine Stufe (Q) umfasst, welche die erste obere Öffnung (611) begrenzt.

2. Reifen (100) nach Anspruch 1, wobei
- die erste Lamelle (500) durch einen Boden (513), eine erste Lamellenseitenwand (511), eine zweite Lamellenseitenwand (512), eine erste Lamellenendwand (514) und eine zweite Lamellenendwand (515) begrenzt ist.

3. Reifen (100) nach Anspruch 1 oder 2, wobei
- sich der erste untere Hohlraum (613) zu dem ersten Hals (612) hin verjüngt und/oder
- eine erste Breite (W1) des ersten unteren Hohlraums (613) größer als eine Breite (WS2) des ersten sekundären Lamellenabschnitts (531) ist, beispielsweise um 0,2 mm bis 8 mm größer.

4. Reifen (100) nach einem der Ansprüche 1 bis 3, wobei
- sich die erste obere Öffnung (611) zu dem ersten Hals (612) hin verjüngt und/oder
- eine dritte Breite (W3) der ersten oberen Öffnung (611) größer als eine/die Breite (WS2) des ersten sekundären Lamellenabschnitts (531) ist, beispielsweise um 0,2 mm bis 4 mm größer.

5. Reifen (100) nach einem der Ansprüche 1 bis 4, wobei die erste Lamelle (500) ferner umfasst:
- einen zweiten primären Lamellenabschnitt (522), der eine zweite obere Öffnung (621), einen zweiten Hals (622) und einen zweiten unteren Hohlraum (623) umfasst, wobei der zweite untere Hohlraum (623) durch einen Abschnitt des Bodens (513) begrenzt ist und der zweite Hals (622) zwischen der zweiten oberen Öffnung (621) und dem zweiten unteren Hohlraum (623) angeordnet ist, wobei
- der erste sekundäre Lamellenabschnitt (531) zwischen dem ersten primären Lamellenabschnitt (521) und dem zweiten primären Lamellenabschnitt (522) angeordnet ist,
- die erste Lamelle (500) im ersten Zustand (ST1) derart angeordnet ist, dass der zweite Hals (622) dazu konfiguriert ist, zuzulassen, dass Fluid und/oder Schnee von der zweiten oberen Öffnung (621) zu dem zweiten unteren Hohlraum (623) strömt, und
- die erste Lamelle (500) im zweiten Zustand (ST2) derart angeordnet ist, dass der zweite Hals dazu konfiguriert ist, zu hemmen, dass Fluid und/oder Schnee von dem zweiten unteren Hohlraum (623) zu der zweiten oberen Öffnung (621) strömt, wobei
- der erste sekundäre Lamellenabschnitt (531) der ersten Lamelle (500) einen Kanal umfasst, der zulässt, dass Fluid und/oder Schnee zwischen dem ersten unteren Hohlraum (613) und dem zweiten unteren Hohlraum (623) strömt;
vorzugsweise
- eine Breite (WS2) der ersten Lamelle (500) innerhalb des ersten sekundären Lamellenabschnitts (531) konstant ist.

6. Reifen (100) nach einem der Ansprüche 1 bis 5, wobei
- der erste Hals (612) eine erste Biegung (661), eine zweite Biegung (662) und eine dritte Biegung (663) umfasst,
- die erste Biegung (661) in einem ersten radialen Abstand von einer Rotationsachse (AX) des Reifens (100) angeordnet ist,
- die zweite Biegung (662) in einem zweiten radialen Abstand von der Rotationsachse (AX) des Reifens (100) angeordnet ist,
- die dritte Biegung (663) in einem dritten radialen Abstand von der Rotationsachse (AX) des Reifens (100) angeordnet ist,
- der erste radiale Abstand kleiner als der zweite radiale Abstand ist,
- der zweite radiale Abstand kleiner als der dritte radiale Abstand ist und
- sich der erste untere Hohlraum (613) von der ersten Biegung (661) zu dem Boden (513) der ersten Lamelle (500) erstreckt.

7. Reifen (100) nach Anspruch 6, wobei
- sich der erste untere Hohlraum (613) von der ersten Biegung (661) des ersten Halses (612) zu dem Boden (513) der ersten Lamelle (500) erstreckt und dabei eine Mittelachse (AXC) des ersten unteren Hohlraums (613) seitlich umgibt,
- an einer Stelle der zweiten Biegung (662) ein Teil des ersten Halses (612) auf einer ersten Seite (SI1) einer ersten Ebene (P1) angeordnet ist, welche die Mittelachse (AXC) des ersten unteren Hohlraums (613) umfasst, und
- an einer Stelle der dritten Biegung (663) ein Teil des ersten Halses (612) auf einer zweiten Seite (SI2) der ersten Ebene (P1) angeordnet ist, wobei
- die erste und die zweite Seite (SI1, SI2) unterschiedliche Seiten der ersten Ebene (P1) sind;
vorzugsweise
- an der Stelle der zweiten Biegung (662) der auf der ersten Seite (SI1) der ersten Ebene (P1) angeordnete Teil des ersten Halses (612) mindestens 0,5 mm von der ersten Ebene (P1) beabstandet angeordnet ist und
- an der Stelle der dritten Biegung (663) der auf der zweiten Seite (SI2) der ersten Ebene (P1) angeordnete Teil des ersten Halses (612) mindestens 0,5 mm von der ersten Ebene (P1) beabstandet angeordnet ist.

8. Reifen (100) nach Anspruch 7, wobei
- an der Stelle der zweiten Biegung (662) kein Teil des ersten Halses (612) auf der zweiten Seite (SI2) der ersten Ebene (P1) angeordnet ist und
- an der Stelle des dritten Biegungspunkts (663) kein Teil des ersten Halses (612) auf der ersten Seite (SI1) der ersten Ebene (P1) angeordnet ist.

9. Reifen (100) nach Anspruch 7 oder 8, wobei
- die Mittelachse (AXC) des ersten unteren Hohlraums (613) innerhalb einer zweiten Ebene (P2) angeordnet ist, die auch eine Richtung (S2) einer Länge der ersten Lamelle (500) umfasst, und
- [i] die zweite Ebene (P2) dieselbe Ebene wie die erste Ebene (P1) ist oder [ii] ein Winkel zwischen einer Normalen der ersten Ebene (P1) und einer Normalen der zweiten Ebene (P2) 90 Grad oder zwischen 0 und 90 Grad beträgt.

10. Reifen (100) nach einem der Ansprüche 1 bis 9, wobei
- der Laufflächenblock (210) dazu konfiguriert ist, sich im ersten Zustand (ST1) zu befinden, wenn der Laufflächenblock (210) der Atmosphäre ausgesetzt ist, und
- der Laufflächenblock (210) dazu konfiguriert ist, sich im zweiten Zustand (ST2) zu befinden, wenn der Laufflächenblock (210) mit einer flachen lasttragenden Oberfläche (900), wie etwa einer Straße, in Kontakt ist und der Reifen (100) durch den Kontakt mit der flachen lasttragenden Oberfläche (900) eine Last von mindestens 2 kN trägt;
wobei der Reifen (100) vorzugsweise ein Luftreifen ist und
- der Laufflächenblock (210) dazu konfiguriert ist, sich im ersten Zustand (ST1) zu befinden, wenn der Reifen (100) aufgepumpt ist und der Laufflächenblock (210) der Atmosphäre ausgesetzt ist, und
- der Laufflächenblock (210) dazu konfiguriert ist, sich im zweiten Zustand (ST2) zu befinden, wenn der Reifen (100) aufgepumpt ist und der Laufflächenblock (210) mit einer flachen lasttragenden Oberfläche (900), wie etwa einer Straße, in Kontakt ist und der Reifen durch den Kontakt mit der flachen lasttragenden Oberfläche (900) eine Last von mindestens 2 kN trägt.

11. Reifen (100) nach einem der Ansprüche 1 bis 10, wobei
- die erste obere Öffnung (611) eine erste Tiefe (D1) aufweist,
- der erste Hals (612) eine zweite Tiefe (D2) aufweist und
- der erste untere Hohlraum (613) eine dritte Tiefe (D3) aufweist, sodass
- eine Tiefe (DS) des ersten primären Lamellenabschnitts (521) einer Summe (D1+D2+D3) der ersten, der zweiten und der dritten Tiefe (D1, D2, D3) entspricht, wobei
- die erste Tiefe (D1) 10 % bis 30 % der Tiefe (DS) des ersten primären Lamellenabschnitts (521) beträgt und/oder
- die zweite Tiefe (D2) 15 % bis 50 % der Tiefe (DS) des ersten primären Lamellenabschnitts beträgt.

12. Reifen nach einem der Ansprüche 1 bis 11, wobei
- eine zweite Breite (W2) des ersten Halses (612) 0,3 mm bis 1,0 mm beträgt, wenn sich der Laufflächenblock (210) im ersten Zustand (ST1) befindet, und/oder
- die zweite Breite (W2) größer als eine Breite eines ersten Übergangsabschnitts (541) ist, wenn sich der Laufflächenblock (210) im ersten Zustand (ST1) befindet, wobei der erste Übergangsabschnitt (541) zwischen dem ersten Hals (612) und dem ersten sekundären Lamellenabschnitt (531) angeordnet ist.

13. Reifen nach einem der Ansprüche 1 bis 12, wobei
- die erste obere Öffnung (611) eine erste Tiefe (D1) aufweist und
- die Stufe (Q) in einer Tiefe (DQ) angeordnet ist, die 10 bis 75 % der ersten Tiefe (D1) beträgt;
vorzugsweise
- sich eine Kante (E) der Stufe (Q) in einer Längsrichtung (S2) der ersten Lamelle (500) erstreckt oder
- sich eine Kante (E) der Stufe (Q) in einer Richtung (S3) einer Breite der ersten Lamelle (500) erstreckt.

14. Lamellenplatte (300), die dazu konfiguriert ist, in einen unvulkanisierten Laufflächenblock eingeführt zu werden, um einen Laufflächenblock (210) auszubilden, wobei die Lamellenplatte (300) derart geformt ist, dass der Laufflächenblock (210) eine erste Lamelle (500) begrenzt, wobei
- der mit der ersten Lamelle (500) versehene Laufflächenblock (210) dazu konfiguriert ist, sich abwechselnd in einem ersten Zustand (ST1) und in einem zweiten Zustand (ST2) zu befinden,
- die erste Lamelle (500) einen ersten primären Lamellenabschnitt (521) und einen ersten sekundären Lamellenabschnitt (531) umfasst,
- der erste primäre Lamellenabschnitt (521) eine erste obere Öffnung (611), einen ersten Hals (612) und einen ersten unteren Hohlraum (613) umfasst und der erste Hals (612) zwischen der ersten oberen Öffnung (611) und dem ersten unteren Hohlraum (613) angeordnet ist, wobei
- der erste Hals (612) einen derartigen Strömungskanal bereitstellt, dass der Strömungskanal im ersten Zustand (ST1) breiter als im zweiten Zustand (ST2) ist, oder dass der erste Hals (612) im zweiten Zustand (ST2) keinen Strömungskanal bereitstellt, wobei die Verengung oder das Schließen des ersten Halses (612) im zweiten Zustand (ST2) durch eine Verformung des Reifens erfolgt, die durch einen Straßenkontakt des Reifens verursacht wird, wodurch
- der erste Hals (612) im ersten Zustand (ST1) dazu konfiguriert ist, zuzulassen, dass Fluid und/oder Schnee von der ersten oberen Öffnung (611) zu dem ersten unteren Hohlraum (613) strömt, und
- der erste Hals (612) im zweiten Zustand (ST2) dazu konfiguriert ist, zu hemmen, dass Fluid und/oder Schnee von dem ersten unteren Hohlraum (613) zu der ersten oberen Öffnung (611) strömt,
**dadurch gekennzeichnet, dass**
- die Lamellenplatte (300) dazu konfiguriert ist, eine solche erste Lamelle (500) auszubilden, dass mindestens eine von einer ersten Lamellenseitenwand (511) und einer zweiten Lamellenseitenwand (512), welche die erste Lamelle (500) begrenzen, eine Stufe (Q) umfasst, welche die erste obere Öffnung (611) begrenzt.

15. Verwendung der Lamellenplatte nach Anspruch 14 zur Herstellung des Reifens (100) nach einem der Ansprüche 1 bis 13.

## Revendications

1. Un bandage (100) comprenant
- une bande de roulement (110) comprenant un bloc de bande de roulement (210), le bloc de bande de roulement (210) délimitant une première lamelle (500), dans lequel
- le bloc de bande de roulement (210) est configuré pour être alternativement dans un premier état (ST1) et dans un second état (ST2),
- la première lamelle (500) comprend une première portion primaire de lamelle (521) et une première portion secondaire de lamelle (531),
- la première portion primaire de lamelle (521) comprend un premier trou supérieur (611), un premier étranglement (612) et une première cavité inférieure (613), la première cavité inférieure (613) étant délimitée par une portion du fond (513), et le premier étranglement (612) étant agencé entre le premier trou supérieur (611) et la première cavité inférieure (613), dans lequel
- le premier étranglement (612) fournit un canal d'écoulement tel que, dans le premier état (ST1), le canal d'écoulement est plus large que dans le second état (ST2), ou que, dans le second état (ST2), le premier étranglement (612) ne fournit pas de canal d'écoulement, le rétrécissement ou la fermeture du premier étranglement (612) dans le second état (ST2) ayant lieu par déformation du bandage causée par un contact du bandage avec la route, moyennant quoi
- dans le premier état (ST1), le premier étranglement (612) est configuré pour permettre à un fluide et/ou à de la neige de s'écouler du premier trou supérieur (611) vers la première cavité inférieure (613), et
- dans le second état (ST2), le premier étranglement (612) est configuré pour empêcher à un fluide et/ou à de la neige de s'écouler de la première cavité inférieure (613) vers le premier trou supérieur (611), **caractérisé en ce que**
- au moins l'une d'une première paroi latérale de lamelle (511) et d'une seconde paroi latérale de lamelle (512), qui délimitent la première lamelle (500), comprend un gradin (Q) qui limite le premier trou supérieur (611).

2. Le bandage (100) selon la revendication 1, dans lequel
- la première lamelle (500) est délimitée par un fond (513), une première paroi latérale de lamelle (511), une seconde paroi latérale de lamelle (512), une première paroi d'extrémité de lamelle (514) et une seconde paroi d'extrémité de lamelle (515).

3. Le bandage (100) selon la revendication 1 ou 2, dans lequel
- la première cavité inférieure (613) se rétrécit en direction du premier étranglement (612) et/ou
- une première largeur (W1) de la première cavité inférieure (613) est supérieure à une largeur (WS2) de la première portion secondaire de lamelle (531), par exemple supérieure de 0,2 mm à 8 mm.

4. Le bandage (100) selon l'une quelconque des revendications 1 à 3, dans lequel
- le premier trou supérieur (611) se rétrécit en direction du premier étranglement (612) et/ou
- une troisième largeur (W3) du premier trou supérieur (611) est supérieure à une/la largeur (WS2) de la première portion secondaire de lamelle (531), par exemple supérieure de 0,2 mm à 4 mm.

5. Le bandage (100) selon l'une quelconque des revendications 1 à 4, dans lequel la première lamelle (500) comprend en outre
- une seconde portion primaire de lamelle (522) comprenant un second trou supérieur (621), un second étranglement (622) et une seconde cavité inférieure (623), la seconde cavité inférieure (623) étant délimitée par une portion du fond (513), et le second étranglement (622) étant agencé entre le second trou supérieur (621) et la seconde cavité inférieure (623), dans lequel
- la première portion secondaire de lamelle (531) est agencée entre la première portion primaire de lamelle (521) et la seconde portion primaire de lamelle (522),
- dans le premier état (ST1), la première lamelle (500) est agencée de telle sorte que le second étranglement (622) est configuré pour permettre à un fluide et/ou à de la neige de s'écouler du second trou supérieur (621) vers la seconde cavité inférieure (623), et
- dans le second état (ST2), la première lamelle (500) est agencée de telle sorte que le second étranglement est configuré pour empêcher à un fluide et/ou à de la neige de s'écouler de la seconde cavité inférieure (623) vers le second trou supérieur (621), dans lequel
- la première portion secondaire de lamelle (531) de la première lamelle (500) comprend un canal qui permet à un fluide et/ou à de la neige de s'écouler entre la première cavité inférieure (613) et la seconde cavité inférieure (623) ;
de préférence,
- une largeur (WS2) de la première lamelle (500) est constante dans la première portion secondaire de lamelle (531).

6. Le bandage (100) selon l'une quelconque des revendications 1 à 5, dans lequel
- le premier étranglement (612) comprend un premier coude (661), un deuxième coude (662) et un troisième coude (663),
- le premier coude (661) est agencé à une première distance radiale d'un axe de rotation (AX) du bandage (100),
- le deuxième coude (662) est agencé à une deuxième distance radiale de l'axe de rotation (AX) du bandage (100),
- le troisième coude (663) est agencé à une troisième distance radiale de l'axe (AX) de rotation du bandage (100),
- la première distance radiale est inférieure à la deuxième distance radiale,
- la deuxième distance radiale est inférieure à la troisième distance radiale, et
- la première cavité inférieure (613) s'étend du premier coude (661) jusqu'au fond (513) de la première lamelle (500).

7. Le bandage (100) selon la revendication 6, dans lequel
- la première cavité inférieure (613) s'étend du premier coude (661) du premier étranglement (612) jusqu'au fond (513) de la première lamelle (500) en entourant latéralement un axe central (AXC) de la première cavité inférieure (613),
- à un emplacement du deuxième coude (662), une partie du premier étranglement (612) est agencée d'un premier côté (SI1) d'un premier plan (P1) comprenant l'axe central (AXC) de la première cavité inférieure (613), et
- à un emplacement du troisième coude (663), une partie du premier étranglement (612) est agencée d'un second côté (SI2) du premier plan (P1), dans lequel
- les premier et second côtés (SI1, SI2) sont des côtés différents du premier plan (P1) ;
de préférence,
- à l'emplacement du deuxième coude (662), la partie du premier étranglement (612) est agencée du premier côté (SI1) du premier plan (P1) à au moins 0,5 mm du premier plan (P1), et
- à l'emplacement du troisième coude (663), la partie du premier étranglement (612) est agencée du second côté (SI2) du premier plan (P1) à au moins 0,5 mm du premier plan (P1).

8. Le bandage (100) selon la revendication 7, dans lequel
- à l'emplacement du deuxième coude (662), aucune partie du premier étranglement (612) n'est agencée du second côté (SI2) du premier plan (P1), et
- à l'emplacement du troisième point de coude (663), aucune partie du premier étranglement (612) n'est agencée du premier côté (SI1) du premier plan (P1).

9. Le bandage (100) selon la revendication 7 ou 8, dans lequel
- l'axe central (AXC) de la première cavité inférieure (613) est agencé dans un second plan (P2) qui comprend également une direction (S2) d'une longueur de la première lamelle (500), et
- [i] le second plan (P2) est le même plan que le premier plan (P1), ou [ii] un angle entre une normale au premier plan (P1) et une normale au second plan (P2) est de 90 degrés ou compris entre 0 et 90 degrés.

10. Le bandage (100) selon l'une quelconque des revendications 1 à 9, dans lequel
- le bloc de bande de roulement (210) est configuré pour être dans le premier état (ST1) lorsque le bloc de bande de roulement (210) est exposé à l'atmosphère, et
- le bloc de bande de roulement (210) est configuré pour être dans le second état (ST2) lorsque le bloc de bande de roulement (210) est en contact avec une surface plane porteuse (900), telle qu'une route, et que le bandage (100) supporte une charge d'au moins 2 kN par ledit contact avec la surface plane porteuse (900) ;
de préférence, le bandage (100) est un bandage pneumatique et
- le bloc de bande de roulement (210) est configuré pour être dans le premier état (ST1) lorsque le bandage (100) est gonflé et que le bloc de bande de roulement (210) est exposé à l'atmosphère, et
- le bloc de bande de roulement (210) est configuré pour être dans le second état (ST2) lorsque le bandage (100) est gonflé et que le bloc de bande de roulement (210) est en contact avec une surface plane porteuse (900), telle qu'une route, et que le bandage supporte une charge d'au moins 2 kN par ledit contact avec la surface plane porteuse (900).

11. Le bandage (100) selon l'une quelconque des revendications 1 à 10, dans lequel
- le premier trou supérieur (611) a une première profondeur (D1),
- le premier étranglement (612) a une deuxième profondeur (D2), et
- la première cavité inférieure (613) a une troisième profondeur (D3), de telle sorte que
- une profondeur (DS) de la première portion primaire de lamelle (521) est égale à une somme (D1+D2+D3) des première, deuxième et troisième profondeurs (D1, D2, D3), dans lequel
- la première profondeur (D1) représente 10 % à 30 % de la profondeur (DS) de la première portion primaire de lamelle (521) et/ou
- la deuxième profondeur (D2) représente 15 % à 50 % de la profondeur (DS) de la première portion primaire de lamelle.

12. Le bandage selon l'une quelconque des revendications 1 à 11, dans lequel
- une deuxième largeur (W2) du premier étranglement (612) est de 0,3 mm à 1,0 mm lorsque le bloc de bande de roulement (210) est dans le premier état (ST1) et/ou
- la deuxième largeur (W2) est supérieure à une largeur d'une première portion de transition (541) lorsque le bloc de bande de roulement (210) est dans le premier état (ST1), dans lequel la première portion de transition (541) est agencée entre le premier étranglement (612) et la première portion secondaire de lamelle (531).

13. Le bandage selon l'une quelconque des revendications 1 à 12, dans lequel
- le premier trou supérieur (611) a une première profondeur (D1), et
- le gradin (Q) est agencé à une profondeur (DQ) qui représente 10 à 75 % de la première profondeur (D1) ;
de préférence,
- un bord (E) du gradin (Q) s'étend dans une direction longitudinale (S2) de la première lamelle (500), ou
- un bord (E) du gradin (Q) s'étend dans une direction (S3) d'une largeur de la première lamelle (500).

14. Une plaque de lamelle (300) configurée pour être insérée dans un bloc de bande de roulement non vulcanisé afin de former un bloc de bande de roulement (210), la plaque de lamelle (300) étant conformée de telle sorte que le bloc de bande de roulement (210) délimite une première lamelle (500), dans laquelle
- le bloc de bande de roulement (210) pourvu de la première lamelle (500) est configuré pour être alternativement dans un premier état (ST1) et dans un second état (ST2),
- la première lamelle (500) comprend une première portion primaire de lamelle (521) et une première portion secondaire de lamelle (531),
- la première portion primaire de lamelle (521) comprend un premier trou supérieur (611), un premier étranglement (612) et une première cavité inférieure (613), le premier étranglement (612) étant agencé entre le premier trou supérieur (611) et la première cavité inférieure (613), dans laquelle
- le premier étranglement (612) fournit un canal d'écoulement tel que, dans le premier état (ST1), le canal d'écoulement est plus large que dans le second état (ST2), ou que, dans le second état (ST2), le premier étranglement (612) ne fournit pas de canal d'écoulement, le rétrécissement ou la fermeture du premier étranglement (612) dans le second état (ST2) ayant lieu par déformation du bandage causée par un contact du bandage avec la route, moyennant quoi
- dans le premier état (ST1), le premier étranglement (612) est configuré pour permettre à un fluide et/ou à de la neige de s'écouler du premier trou supérieur (611) vers la première cavité inférieure (613), et
- dans le second état (ST2), le premier étranglement (612) est configuré pour empêcher à un fluide et/ou à de la neige de s'écouler de la première cavité inférieure (613) vers le premier trou supérieur (611), **caractérisée en ce que**
- la plaque de lamelle (300) est configurée pour former une première lamelle (500) telle qu'au moins l'une d'une première paroi latérale de lamelle (511) et d'une seconde paroi latérale de lamelle (512), qui délimitent la première lamelle (500), comprend un gradin (Q) qui limite le premier trou supérieur (611).

15. Utilisation de la plaque de lamelle selon la revendication 14 pour produire le bandage (100) selon l'une quelconque des revendications 1 à 13.
